# EUROPEAN PATENT SPECIFICATION

(11) **EP 3 078 761 B1**
(45) Date of publication and mention of the grant of the patent: **29.08.2018**
(21) Application number: 16164017.2
(22) Date of filing: 06.04.2016
(51) Int. Cl.: C23C 4/04, C23C 4/10, C23C 4/12

(54) **METHOD OF MANUFACTURING A SOLID LUBRICANT FILLED STRUCTURAL MATRIX**
VERFAHREN ZUR HERSTELLUNG EINER FESTSCHMIERSTOFF ENTHALTENDEN MATRIX
PROCÉDÉ DE FABRICATION D' UNE MATRICE STRUCTURELLE CONTENANT UN LUBRIFIANT SOLIDE

(30) Priority: 10.04.2015 US 201514683419
(43) Date of publication of application: 12.10.2016
(73) Proprietor: United Technologies Corporation, Farmington, CT 06032 (US)
(72) Inventor: VARGAS, Chris, West Hartford, CT 06119 (US); PASKIND, Jeremy, Glastonbury, CT 06033 (US)
(74) Representative: Dehns

(56) References cited:
- DE-C1- 4 418 517
- US-A- 5 196 471
- US-A1- 2004 005 452
- US-A1- 2008 145 554
- US-A1- 2008 145 649
- US-A1- 2013 190 888

## Description

### BACKGROUND

The present disclosure relates to a method of manufacturing high temperature, low friction composites, more particularly, of a solid lubricant filled structural matrix.

Coatings for use with low friction interfaces are typically required to have heat resistance, thermal shock resistance, oxidation resistance, and wear resistance. Coating compositions vary depending on the specific applications, e.g., seals for gas turbine engines, sizing equipment, aircraft engine parts, forming tools, glass fiber processing parts, firearm parts, etc. The compositions also vary depending on the function of the component, i.e., locking, ejection, sliding, rolling, rotating, impacting, bearing, etc.

Furthermore, coating compositions vary depending on the expected usage temperatures since, as temperature increases, the coefficient of friction (COF) increases for most materials. For example, the COF of a nickel alloy about 0.23 at room temperature, but is about 0.35 at 1000F (538C), and about 0.72 at 1200F (649C). This increase of COF with an increase temperature becomes a design consideration for parts operating at elevated temperatures.

Currently, relatively durable high temperature (1500F and greater) low friction surface treatments are relatively difficult to manufacture. While hexagonal boron nitride (h-BN) can be applied to a substrate, this is merely a painting of the surface and the h-BN is readily worn away. DE 4418517 discloses layers of hard and/or ceramic materials comprising lubricants. An implant coating comprising bioactive glass in or on a porous titanium-based layer is disclosed in US 2013/0190888. US 2008/145554 and US 5,196,471 disclose thermal spray powders comprising lubricants. Coating compositions comprising a spray-dried powder of M-CrAlY and a solid lubricant are disclosed in US 2004/0005452. Coating compositions comprising a metallic matrix, a ceramic phase and a lubricant are disclosed in US 2008/0145649.

### SUMMARY

The method to manufacture a coating (e.g. a coating as described herein) according to the present invention is provided in claim 1. The method includes applying a structural matrix having a porous body with open and connected porosity to a substrate; combining a soluble silicate glass binder with a solid lubricant; applying the soluble silicate glass binder with solid lubricant into the porosity via vacuum impregnation; wherein the structural matrix provides the mechanical structure to hold the soluble silicate glass binder and solid lubricant in place. The structural matrix is reticulated and the solid lubricant is mechanically retained within the structural matrix.

A further embodiment may include, wherein the step of applying the structural matrix to the substrate includes thermal spraying.

A further embodiment of any of the foregoing embodiments of the present disclosure may include, wherein the step of applying the structural matrix to the substrate includes additive manufacturing.

The at least partially filling includes vacuum impregnation.

A further embodiment of any of the foregoing embodiments of the present disclosure may include, wherein the at least partially filling includes forming a liquid suspension with the solid lubricant.

A further embodiment of any of the foregoing embodiments of the present disclosure may include, applying a vacuum such that air in the pores is evacuated and replaced with the liquid suspension.

The at least partially filling includes adding a binder to the solid lubricant.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
Figure 1 is a schematic cross-sectional view of a coating manufactured according to the inventive method;
Figure 2 is an expanded top view of the coating; and
Figure 3 is a block diagram of a non-inventive method to manufacture the coating.

### DETAILED DESCRIPTION

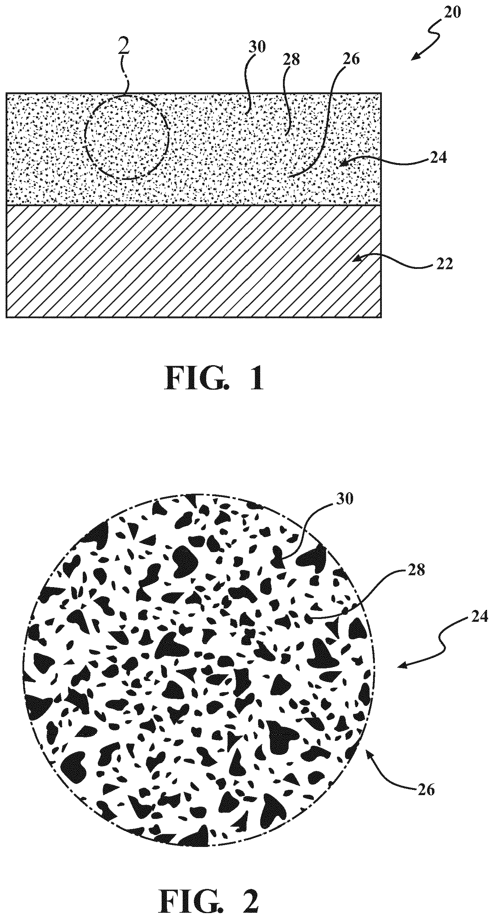

Figure 1 schematically illustrates a representative cross-section of a component 20 including a substrate 22 and a coating 24 applied thereto. It should be appreciated that the component can be any component that requires a low friction interface to operate at elevated temperatures. Such components may be particularly applicable to gas turbine engine environments. Some example components include, but are not limited to, halo seals, and active clearance control systems in the gas turbine engine environment.

The coating 24 includes a structural matrix 26 having a porosity 28 formed therein and a solid lubricant 30 that at least partially fills the porosity. The structural matrix 26 essentially traps the solid lubricant 30 therein and is thus not readily worn away to form a high temperature low friction composite.

The structural matrix 26 is a porous body with open and connected porosity 28, often referred to as reticulated. The structural matrix 26 provides the mechanical structure to hold the solid lubricant 30 in place. The structural matrix 26 can, for example, be manufactured of a metal, ceramic, or combination thereof. Examples of metallic structural matrices include, but are not limited to nickel alloys such as Waspaloy, Haynes 282, C-263, Hastelloy X, IN625, etc. and cobalt alloys such as Stellite 6B, Stellite 31, etc. Composite structural matrix examples include, but are not limited to WC-Co, CrC-NiAl, etc.

The porosity 28, in one example, may be between about 8%-40% open (Figure 2). That is, the porosity 28 is an open cell arrangement in which the structural matrix 26 forms a three-dimensional net that readily capturers the solid lubricant 30.

Once the structural matrix 26 is formed, the porosity 28 is filled with the solid lubricant 30. The solid lubricant 30 may include, but not be limited to, h-BN, CuO, ZnO, MgO, MnO2 and B2O3.

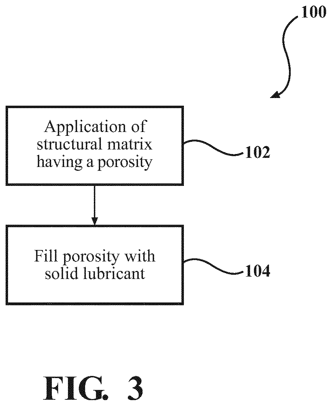

With reference to Figure 3, a method 100 to manufacture the coating 24 according to one disclosed non-limiting example initially includes application of the structural matrix 26 (step 102). The structural matrix 26 can be produced by various production methods that produce porous bodies, for example, as powder metal sintering, metal injection molding, additive manufacturing, ceramic sintering, and thermal spray coatings. In one embodiment, the structural matrix 26 is about 0.762 mm (0.03 inches) thick. In another embodiment, the structural matrix 26 such as tungsten carbide, cobalt, Chromium Carbide, or Nickel alloy (NiCr) composite is thermal sprayed such as via plasma, flame, HVOF, cold spray, etc., and is between about 0.0762-0.254 mm (0.003 -0.01 inches) thick. Alternatively still, the structural matrix 26 can be formed in-situ on the substrate 22 by additive manufacturing such as via Direct Metal Laster Sintering, laser powder deposition, electron beam deposition, etc.

Next, the porosity 28 is filled with the solid lubricant 30 (step 104). In one non-inventive example, the a liquid suspension is formed with the solid lubricant 30 and the structural matrix 26 is immersed in the liquid suspension under a vacuum such that air in the pores is evacuated and replaced with the liquid suspension. The suspension is wicked into the porosity 28 via capillary action. Then, the liquid is evaporated such that the solid lubricant 30 remains trapped within the pores. The solid lubricant 30 is of granularity to facilitate entry into the pores, yet is large enough that the solid lubricant 30 remains mechanically trapped therein once the suspension is evaporated to complete the high temperature low friction composite.

In the inventive method, a soluble silicate glass binder, is combined with the solid lubricant 30 then applied as above or essentially as a paste that is mechanically forced into the porosity via vacuum impregnation, or combinations thereof. Then, once the silicate glass binder dries, and the liquid is evaporated, the solid lubricant 30 and binder remain mechanically trapped in the structural matrix 26 completing the high temperature low friction composite. That is, the binder is agglomerated to increase bonding strength between the structural matrix 26 and the solid lubricant 30.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be appreciated that like reference numerals identify corresponding or similar elements throughout the several drawings. It should also be appreciated that although a particular component arrangement is disclosed in the illustrated embodiment, other arrangements will benefit herefrom.

## Claims

1. A method to manufacture a coating, comprising:
(i) applying a structural matrix having a porous body with open and connected porosity to a substrate;
(ii) combining a soluble silicate glass binder with a solid lubricant; and
(iii) applying the soluble silicate glass binder with solid lubricant into the porosity via vacuum impregnation;
wherein the structural matrix provides the mechanical structure to hold the soluble silicate glass binder and solid lubricant in place.

2. The method as recited in claim 1 wherein said coating is a coating on a gas turbine engine component.

3. The method as recited in claim 1 or claim 2, wherein the step of applying the structural matrix to the substrate includes thermal spraying.

4. The method as recited in any one of the preceding claims, wherein the step of applying the structural matrix to the substrate includes additive manufacturing.

5. The method as recited in any one of the preceding claims, wherein said structural matrix is manufactured of a nickel alloy or a cobalt alloy.

6. The method as recited in any one of the preceding claims, wherein said structural matrix is 0.762 mm (0.03 inches) thick.

7. The method as recited in any one of claims 1 to 5, wherein said structural matrix is thermal sprayed and between 0.0762 and 0.254 mm (0.003 and 0.01 inches) thick.

8. The method as recited in any one of the preceding claims, wherein said solid lubricant includes at least one of h-BN, CuO, ZnO, MgO, MnO₂, and B₂O₃.

## Patentansprüche

1. Verfahren zur Herstellung einer Beschichtung, umfassend:
(i) Aufbringen einer strukturellen Matrix, die einen porösen Körper mit offener und verbundener Porosität aufweist, auf ein Substrat;
(ii) Kombinieren eines löslichen Silikatglas-Bindemittels mit einem Festschmierstoff; und
(iii) Aufbringen des löslichen Silikatglas-Bindemittels mit Festschmierstoff in die Porosität mittels Vakuumimprägnierung;
wobei die strukturelle Matrix die mechanische Struktur bereitstellt, um das lösliche Silikatglas-Bindemittel und den Festschmierstoff zu fixieren.

2. Verfahren nach Anspruch 1, wobei die Beschichtung eine Beschichtung auf einem Gasturbinenmotorbauteil ist.

3. Verfahren nach Anspruch 1 oder 2, wobei der Schritt des Aufbringens der strukturellen Matrix auf das Substrat thermisches Spritzen beinhaltet.

4. Verfahren nach einem der vorhergehenden Ansprüche, wobei der Schritt des Aufbringens der strukturellen Matrix auf das Substrat additive Herstellung beinhaltet.

5. Verfahren nach einem der vorhergehenden Ansprüche, wobei die strukturelle Matrix aus einer Nickellegierung oder einer Kobaltlegierung hergestellt wird.

6. Verfahren nach einem der vorhergehenden Ansprüche, wobei die strukturelle Matrix 0,762 mm (0,03 Zoll) dick ist.

7. Verfahren nach einem der Ansprüche 1 bis 5, wobei die strukturelle Matrix thermisch gespritzt wird und zwischen 0,0762 mm und 0,254 mm (0,003 und 0,01 Zoll) dick ist.

8. Verfahren nach einem der vorhergehenden Ansprüche, wobei der Festschmierstoff mindestens eines von h-BN, CuO, ZnO, MgO, MnO₂ und B₂O₃ beinhaltet.

## Revendications

1. Procédé de fabrication d'un revêtement, comprenant :
(i) l'application d'une matrice structurelle ayant un corps poreux avec une porosité ouverte et connectée sur un substrat ;
(ii) la combinaison d'un liant de verre de silicate soluble avec un lubrifiant solide ; et
(iii) l'application du liant de verre de silicate soluble avec un lubrifiant solide dans la porosité via une imprégnation sous vide ;
dans lequel la matrice structurelle fournit la structure mécanique pour maintenir le liant de verre de silicate soluble et le lubrifiant solide en place.

2. Procédé selon la revendication 1, dans lequel ledit revêtement est un revêtement sur un composant de turbine à gaz.

3. Procédé selon la revendication 1 ou 2, dans lequel l'étape d'application de la matrice structurelle sur le substrat comprend une pulvérisation à chaud.

4. Procédé selon l'une quelconque des revendications précédentes, dans lequel l'étape d'application de la matrice structurelle sur le substrat comprend une fabrication additive.

5. Procédé selon l'une quelconque des revendications précédentes, dans lequel ladite matrice structurelle est fabriquée en un alliage de nickel ou en un alliage de cobalt.

6. Procédé selon l'une quelconque des revendications précédentes, dans lequel ladite matrice structurelle mesure 0,762 mm (0,03 pouce) d'épaisseur.

7. Procédé selon l'une quelconque des revendications 1 à 5, dans lequel ladite matrice structurelle est pulvérisée à chaud et mesure entre 0,0762 et 0,254 mm (0,003 et 0,01 pouce) d'épaisseur.

8. Procédé selon l'une quelconque des revendications précédentes, dans lequel ledit lubrifiant solide comprend au moins l'un de h-BN, CuO, ZnO, MgO, MnO₂ et B₂O₃.
